# EUROPEAN PATENT SPECIFICATION

(11) **EP 1 749 462 B1**
(45) Date of publication and mention of the grant of the patent: **06.08.2008**
(21) Application number: 05020656.4
(22) Date of filing: 22.09.2005
(51) Int. Cl.: A47J 31/06, A47J 31/46

(54) **Brewing apparatus for preparing foam, froth, or crema under low pressure**
Brühvorrichtung zur Herstellung von Schaum unter Niederdruck
Dispositif d'infusion pour préparer de la mousse à basse pression

(30) Priority: 02.08.2005 US 195843
(43) Date of publication of application: 07.02.2007
(73) Proprietor: Electrical and Electronics Limited, Tai Po, N.T. Hong Kong (CN)
(72) Inventor: Chen, Yee Mau, 53 Ting Kok Road Tai Po N.T. Hong Kong (CN); Wong, Wai Ming, 53 Ting Kok Road Tai Po N.T. Hong Kong (CN)
(74) Representative: Capasso, Olga

(56) References cited:
- EP-A- 1 319 357
- EP-A- 1 498 059
- EP-A- 1 563 774
- WO-A-00/07488
- WO-A-20/04100739
- WO-A-20/05058109
- US-A1- 2005 076 783

## Description

### BACKGROUND OF THE INVENTION

Coffee beverages with a thick, foamy layer called "crema" are becoming increasingly popular among coffee drinkers and aficionados. Resembling the head one would find of a glass of stout, it is full of rich aroma and leaves a lingering flavor. Typically, coffee beverages, such as espresso, which are brewed under high pressure (15-19 bar) will have a layer of crema. The crema traps the fine aromatics and the light gaseous flavors of the coffee which can be quite pleasing to the palate. Like a blanket, it retains the pleasant aromas and flavors which would otherwise quickly escape from the coffee beverage.

Those of ordinary skill in the art currently use high-pressure brewing methods and apparatuses to prepare coffee beverages with the desired layer of foam, froth, or crema. It is widely-accepted by those in the art that good bar pressure is essential for making good crema. A pressure of 15-19 bar is considered the optimum range, although some skilled in the art claim 9-11 bar is sufficient if the coffee beans have been ground correctly. Unfortunately, it thus follows that regular coffee, which is currently brewed by conventional methods and apparatuses without high pressure, lacks the desired layer of crema. In response to this unmet need for a low-pressure solution, Applicants hereby disclose the present invention which relates to a brewing apparatus capable of preparing foam, froth, or crema, particularly for coffee beverages, using low pressures.

Document US 2005/0076783 discloses a beverage device for making a beverage with a foam layer on top.

### SUMMARY OF THE INVENTION

The present invention pertains to a brewing filter apparatus capable of preparing foam, froth, or crema, particularly for coffee beverages, under low pressure. The apparatus of the present invention can operate at pressures below 15 bar and as low as 1-3 bar.

The apparatus of the present invention comprises a filter (3), a coffee container (4), an 0-ring (5), and a foam maker (6) comprising two holes (7) that directly oppose each other allowing two opposing jets of coffee to race into said foam maker (6) and a mesh (2) situated in the center of said foam maker (6) directly in the path of and between the opposing jets of coffee. In a preferred embodiment, the filter is made of stainless steel, and the O-ring is made of silicone rubber. The apparatus is designed to be used in conjunction with a general brew head assembly, such as a single-serve coffee machine.

The foam maker comprises two small holes which directly oppose each other and have a diameter in the range of 0.3 to 1 mm, such that when coffee is being brewed, two small opposing jets of coffee liquid will race inward and turbulently contact each other inside the foam maker. To further facilitate the formation of crema, a stainless steel wire mesh may be placed inside the foam maker between the two jets of coffee liquid to increase the contact area and agitation. As a result of the agitation and turbulence, the contacted coffee liquid forms a layer of fine bubbles known as crema.

### DESCRIPTION OF THE FIGURES

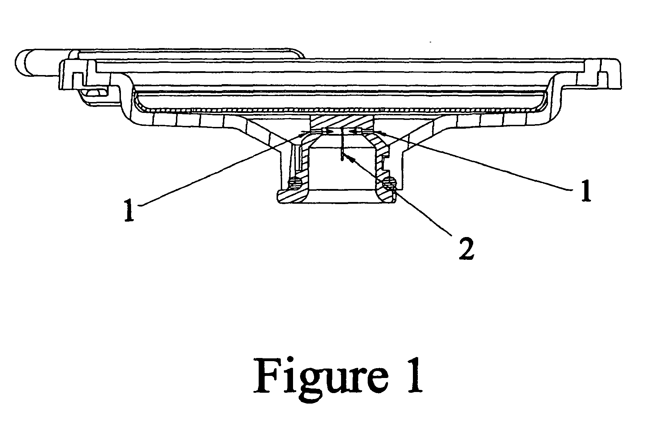

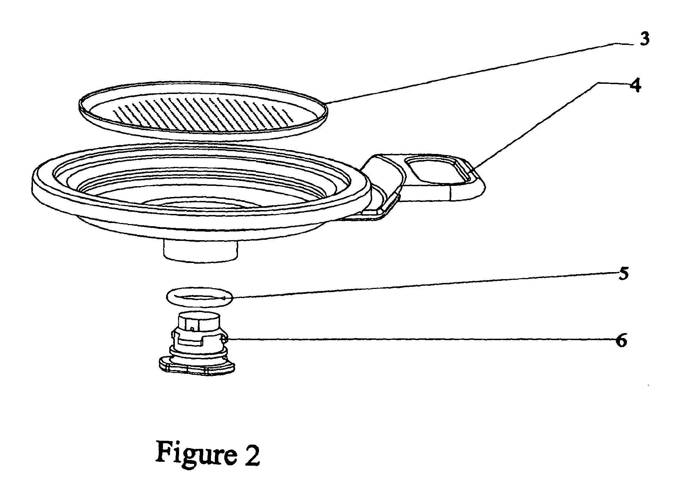

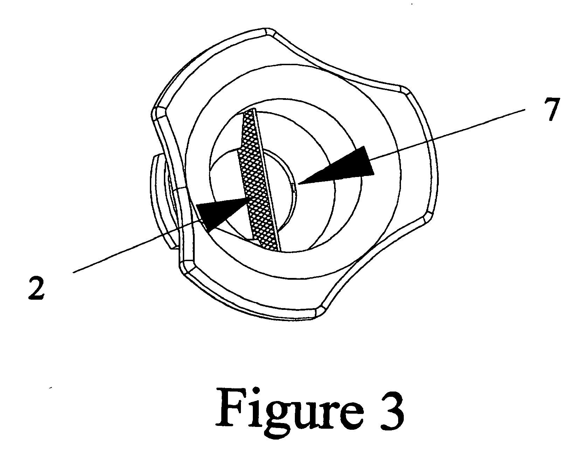

The present invention relates to a low-pressure brewing apparatus capable of preparing foam, froth, or crema, especially for crema coffee. The present invention is shown in Figures 1 to 3.

Figure 1 is a cross-sectional illustration of the brewing filter apparatus with arrows 1 showing the direction of the coffee flow/jet into the apparatus when preparing crema. In addition, a stainless steel wire mesh 2 is situated in the center between the coffee jets.

Figure 2 is an exploded view of the brewing filter apparatus.

Figure 3 is an isometric view of the foam maker showing one of the two opposing holes 7 for the coffee jets and a stainless steel wire mesh 2 situated in the center, separating the two opposing holes.

### DETAILED DESCRIPTION OF THE INVENTION

The present invention pertains to a brewing filter apparatus capable of preparing foam, froth, or crema, particularly for coffee beverages, under low pressure. While the current state of the art considers 15-19 bar pressure to be the optimum range for the formation of crema, the present invention is capable of preparing crema at pressures below 15 bar and as low as 1-3 bar.

The apparatus of the present invention comprises a filter **3,** coffee container **4,** an O-ring **5,** and a foam maker **6** having a plurality of holes. In a preferred embodiment, the filter is made of metal, such as stainless steel, and the O-ring is made of silicone rubber. These parts may be assembled together after individual molding or other appropriate method of construction. The brewing filter apparatus is designed to be used in conjunction with a coffee or beverage-making machine.

The metal filter **3** is affixed to coffee container **4** from above and may be press-fitted or attached to the coffee container **4** using appropriate fitting methods, such as welding or brazing. The metal filter **3** is used to separate the coffee grounds or coffee pod from the foam maker **6.** The foam maker is responsible for facilitating the formation of crema.

The main component of the brewing filter apparatus is the coffee container **4.** The coffee container **4** of the brewing filter apparatus is designed to be used in obtaining and/or measuring the required amount of coffee grounds or coffee pods needed for making the desired amount of brewed coffee. The coffee container may be constructed of a suitable material that is FDA approved and capable of tolerating hot water temperatures of approximately 100 degrees Celsius. The material may be metal (e.g., stainless steel) or plastic (e.g., polypropylene).

The coffee container **4** also has the handle so that the user can hold the brewing filter apparatus. Preferably, the handle should be constructed of a sturdy, insulating material so as to protect the user from the heat of the coffee container. To serve its intended purpose, the handle may be constructed of a suitable material such as polypropylene plastic.

The foam maker **6** is affixed to the coffee container **4** from below and may be affixed to the coffee container **4** by a screw fit, whereby the exterior of said foam maker comprises threads and said coffee container comprises an orifice with corresponding grooves for receiving said threads. The foam maker may also be affixed to the coffee container by spot welding. The foam maker may be constructed of a suitable material such as plastic, metal, or a combination thereof. In one embodiment, the plastic is polypropylene and the metal is stainless steel. In a preferred embodiment, the plastic is glass-filled nylon and the metal is brass. The O-ring **5** is placed between the foam maker **6** and the coffee container **4** so as to form a seal.

The foam maker **6** has two opposing holes **7** extending from its exterior to its interior. The size of the holes ranges from 0.3 to 1 mm in diameter. During operation, the holes allow a horizontal jet of coffee to race into the interior of the foam maker, thereby turbulently contacting the other opposing jet of coffee and creating foam, froth, or crema. To facilitate agitation of the coffee and thus the formation of crema, a mesh **2,** preferably made of stainless steel wire, is situated in the center of the foam maker **6** directly in the path of and between the opposing jets of coffee. Preferably, the mesh has in the range of 50 to 100 eyes per cm². The mesh provides a larger surface area for the contacting of the opposing coffee jets, resulting in greater turbulence of the coffee and the formation of more crema.

The brewing filter apparatus may be adapted or modified for use on various single-serve coffee machines. This is possible because the sealing component is located on the coffee machine. To begin, the user need just place the coffee grounds or coffee pod into the filter which is situated above the coffee container. A mesh cover may optionally be used to cover the coffee grounds, but such is unnecessary when using a coffee pod. The user may then insert the brewing filter apparatus into the coffee machine. During operation, the crema coffee or other brewed beverage will then flow from the brewing filter apparatus to the spout of the coffee maker and then to the user's cup.

The operation of this apparatus is relatively easy and straightforward. First, the user puts the proper amount of coffee grounds in the filter which sits on top of the coffee container of the apparatus. A mesh cover, which is optional and distinguished from the above-mentioned filter, may be placed on top of the coffee grounds to ensure that the grounds remain on the filter. A coffee pod may also be used with the apparatus such that a mesh cover is unnecessary. In such an instance, the coffee pod can be placed directly in the coffee container. The brewing filter apparatus is then placed on a coffee-making machine and secured. The present invention is now ready for brewing crema coffee.

Although, the preferred embodiment of the present invention is directed to making crema coffee, it should be understood that the brewing filter apparatus can be used to brew beverages and concoctions including, but not limited to, tea, liquid extracts, and the like.

## Claims

1. A brewing filter apparatus comprising a filter (3), a coffee container (4), an O-ring (5), and a foam maker (6), wherein said filter (3) is affixed to said coffee container (4) from above, said foam maker (6) is affixed to said coffee container (4) from below, the affixation of said foam maker (6) and coffee container (4) is sealed by said O-ring (5), **characterized in that** the foam maker (6) comprises two holes (7) that directly oppose each other allowing two opposing jets of coffee to race into said foam maker (6) and a mesh (2) situated in the center of said foam maker (6) directly in the path of and between the opposing jets of coffee.

2. The brewing filter apparatus of claim 1, wherein the filter (3) is affixed to the coffee container (4) by press fitting, welding, or brazing.

3. The brewing filter apparatus of claim 1, wherein the filter (3) is made of suitable metal.

4. The brewing filter apparatus of claim 3, wherein the metal is stainless steel.

5. The brewing filter apparatus of claim 1, wherein the coffee container (4) is made of suitable metal or plastic.

6. The brewing filter apparatus of claim 1, wherein the O-ring (5) is made of an elastomer.

7. The brewing filter apparatus of claim 6, wherein the elastomer is silicone rubber.

8. The brewing filter apparatus of claim 1, wherein the foam maker (6) is affixed to the coffee container (4) by screw fit or spot welding, whereby the exterior of said foam maker (6) comprises threads and said coffee container (4) comprises an orifice with corresponding grooves for receiving said threads.

9. The brewing filter apparatus of claim 1, wherein the foam maker (6) is made of suitable metal or plastic.

10. The brewing filter apparatus of claim 9, wherein the metal is brass.

11. The brewing filter apparatus of claim 9, wherein the plastic is glass-filled nylon.

12. The brewing filter apparatus of claim 1, wherein the diameter of the holes (7) of the foam maker (6) ranges from 0.3 to 1 mm.

13. The brewing filter apparatus of claim 1, wherein the mesh (2) has in the range of 50 to 100 eyes per cm².

14. The brewing filter apparatus of claim 13, wherein the mesh (2) is made of stainless steel wire.

15. A method of preparing foam, froth, or crema, comprising using the brewing filter apparatus of claim 1 at a pressure less than 15 bars.

16. The method of claim 15, wherein the pressure is in the range of 1-3 bars.

## Patentansprüche

1. Brühfiltervorrichtung, umfassend einen Filter (3), einen Kaffeebehälter (4), einen O-Ring (5) und einen Schaumbereiter (6), wobei der Filter (3) an dem Kaffeebehälter (4) von oben befestigt ist, der Schaumbereiter (6) an dem Kaffeebehälter (4) von unten befestigt ist, die Befestigung des Schaumbereiters (6) und des Kaffeebehälters (4) durch den O-Ring (5) abgedichtet ist, **dadurch gekennzeichnet, dass** der Schaumbereiter (6) zwei Löcher (7), die direkt einander gegenüber stehen, so dass zwei gegenüberstehende Kaffeestrahlen in den Schaumbereiter (6) laufen können, und ein Geflecht (2) umfasst, das in der Mitte des Schaumbereiters (6) direkt im Weg und zwischen den gegenüberliegenden Kaffeestrahlen angeordnet ist.

2. Brühfiltervorrichtung nach Anspruch 1, wobei der Filter (3) an dem Kaffeebehälter (4) mittels Pressfit-Verbindung, durch Schweißen oder Löten befestigt wird.

3. Brühfiltervorrichtung nach Anspruch 1, wobei der Filter (3) aus einem geeigneten Metall hergestellt ist.

4. Brühfiltervorrichtung nach Anspruch 3, wobei das Metall ein Edelmetall ist.

5. Brühfiltervorrichtung nach Anspruch 1, wobei der Kaffeebehälter (4) aus einem geeigneten Metall oder Kunststoff hergestellt ist.

6. Brühfiltervorrichtung nach Anspruch 1, wobei der 0-Ring (5) aus einem Elastomer hergestellt ist.

7. Brühfiltervorrichtung nach Anspruch 6, wobei es sich bei dem Elastomer um Silikon-Gummi handelt.

8. Brühfiltervorrichtung nach Anspruch 1, wobei der Schaumbereiter (6) an dem Kaffeebehälter (4) durch Verschrauben oder Punktschweißen befestigt ist, wobei das Äußere des Schaumbereiters (6) Gewinde umfasst und der Kaffeebehälter (4) eine Öffnung mit entsprechenden Nuten zur Aufnahme der Gewinde umfasst.

9. Brühfiltervorrichtung nach Anspruch 1, wobei der Schaumbereiter (6) aus einem geeigneten Metall oder Kunststoff hergestellt ist.

10. Brühfiltervorrichtung nach Anspruch 9, wobei es sich bei dem Metall um Messing handelt.

11. Brühfiltervorrichtung nach Anspruch 9, wobei der Kunststoff ein glasfaserverstärkter Nylon ist.

12. Brühfilterverfahren nach Anspruch 1, wobei der Durchmesser der Löcher (7) des Schaumbereiters (6) zwischen 0,3 und 1 mm beträgt.

13. Brühfiltervorrichtung nach Anspruch 1, wobei das Geflecht (2) eine Maschengröße von 50 bis 100 Maschen pro cm² aufweist.

14. Brühfiltervorrichtung nach Anspruch 13, wobei das Geflecht (2) aus Edelstahldraht hergestellt ist.

15. Verfahren zum Erzeugen von Schaum oder Crema, das die Verwendung der Brühfiltervorrichtung nach Anspruch 1 bei einem Druck von maximal 15 Bar umfasst.

16. Verfahren nach Anspruch 15, wobei der Druck zwischen 1 und 3 Bar beträgt.

## Revendications

1. Appareil de filtration d'infusion comprenant un filtre (3), un conteneur de café (4), un joint torique (5), et un dispositif de production de mousse (6), dans lequel ledit filtre (3) est fixé sur ledit conteneur de café (4) par-dessus, ledit dispositif de production de mousse (6) est fixé sur ledit conteneur de café (4) par-dessous, la fixation dudit dispositif de production de mousse (6) et du conteneur de café (4) est scellée par ledit joint torique (5), **caractérisé en ce que** le dispositif de production de mousse (6) comprend deux trous (7) qui s'opposent directement l'un à l'autre en permettant à deux jets opposés de café de passer dans ledit dispositif de mousse (6) et une grille (2) située au centre dudit dispositif de production de mousse (6) directement dans le chemin des jets opposés de café et entre ceux-ci.

2. Appareil de filtration d'infusion selon la revendication 1, dans lequel le filtre (3) est fixé sur le conteneur de café (4) par adaptation par presse, par soudure ou par brasage.

3. Appareil de filtration d'infusion selon la revendication 1, dans lequel le filtre (3) est constitué d'un métal approprié.

4. Appareil de filtration d'infusion selon la revendication 3, dans lequel le métal est de l'acier inoxydable.

5. Appareil de filtration d'infusion selon la revendication 1, dans lequel le conteneur de café (4) est constitué d'un métal ou d'un plastique approprié.

6. Appareil de filtration d'infusion selon la revendication 1, dans lequel le joint torique (5) est constitué d'un élastomère.

7. Appareil de filtration d'infusion selon la revendication 6, dans lequel l'élastomère est du caoutchouc de silicone.

8. Appareil de filtration d'infusion selon la revendication 1, dans lequel le dispositif de production de mousse (6) est fixé sur le conteneur de café (4) par adaptation par vis ou par point de soudure, moyennant quoi l'extérieur dudit dispositif de production de mousse (6) comprend des filetages et ledit conteneur de café (4) comprend un orifice avec des rainures correspondantes pour recevoir lesdits filetages.

9. Appareil de filtration d'infusion selon la revendication 1, dans lequel le dispositif de production de mousse (6) est constitué d'un métal ou d'un plastique approprié.

10. Appareil de filtration d'infusion selon la revendication 9, dans lequel le métal est du laiton.

11. Appareil de filtration d'infusion selon la revendication 9, dans lequel le plastique est du nylon rempli de verre.

12. Appareil de filtration d'infusion selon la revendication 1, dans lequel le diamètre des trous (7) du dispositif de production de mousse (6) s'étend de 0,3 à 1 mm.

13. Appareil de filtration d'infusion selon la revendication 1, dans lequel la grille (2) a dans la plage de 50 à 100 oeillets par cm².

14. Appareil de filtration d'infusion selon la revendication 13, dans lequel la grille (2) est constituée de fils en acier inoxydable.

15. Procédé de préparation de mousse, écume ou crème, comprenant l'utilisation de l'appareil de filtration d'infusion selon la revendication 1, à une pression inférieure à 15 bars.

16. Procédé selon la revendication 15, dans lequel la pression est dans la plage de 1 à 3 bars.
